Europäisches Patentamt

European Patent Office

Office européen des brevets

(11) Numéro de publication : **0 312 425 B1**

(19)

(12) **FASCICULE DE BREVET EUROPEEN**

(45) Date de publication du fascicule du brevet :
**19.02.92 Bulletin 92/08**

(51) Int. Cl.⁵ : **B60G 7/02**

(21) Numéro de dépôt : **88402490.2**

(22) Date de dépôt : **30.09.88**

(54) **Bras oscillant tiré de suspension pour roue arrière d'un véhicule automobile.**

(30) Priorité : **13.10.87 FR 8714129**

(43) Date de publication de la demande :
**19.04.89 Bulletin 89/16**

(45) Mention de la délivrance du brevet :
**19.02.92 Bulletin 92/08**

(84) Etats contractants désignés :
**DE GB IT**

(56) Documents cités :
**EP-A- 0 070 025**
**US-A- 4 046 403**
**US-A- 4 280 717**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Froumajou, Armand**
**11 Bis, rue Docteur Laennec**
**F-95520 Osny (FR)**

(74) Mandataire : **Beauchamps, Georges et al**
**Cabinet Z.Weinstein 20, avenue de Friedland**
**F-75008 Paris (FR)**

**Description**

La présente invention concerne un dispositif d'articulation d'un support de roue arrière, tel qu'un bras oscillant tiré, sur une structure d'un véhicule automobile.

Plus particulièrement l'invention est relative à une articulation élastique destinée à permettre le débattement oscillant du bras tiré de suspension arrière pour lequel l'axe d'oscillation est perpendiculaire ou légèrement oblique par rapport au plan médian du véhicule et situé devant l'essieu arrière.

On sait que la roue arrière guidée par un tel bras tend, sous l'influence d'une force transversale, par exemple en virage, à prendre un angle d'ouverture par suite de la déflexion des articulations du bras. Une telle ouverture n'est pas favorable à un bon comportement routier du véhicule.

L'objectif de l'invention est donc de proposer une structure d'articulation permettant de limiter, voire même d'inverser la tendance à l'ouverture dans ce type de suspension.

On connaît par le brevet britannique N° 984 858 un dispositif d'articulation destiné à compenser la déflexion radiale des articulations, responsable de l'angle d'ouverture ci-dessus et selon lequel les deux articulations sont décalées angulairement par rapport à l'axe d'oscillation du bras. De cette façon, lorsqu'une force transversale s'exerce sur la roue arrière, les bagues extérieures des articulations tendent à coulisser suivant l'axe de chaque articulation. Il s'ensuit une rotation du bras en plan dans le sens inverse de celui provoqué par la déflexion radiale des articulations et donc de nature à compenser cette dernière.

Cependant, le décalage angulaire entre l'axe des articulations et l'axe d'oscillation du bras introduit lors du débattement un angle conique, interne à l'articulation et proportionnel à la valeur du décalage, donc à la correction souhaitée. Pour absorber cet angle conique, l'articulation doit comporter un manchon en élastomère plus souple (par exemple plus épais radialement) ce qui la rend aussi notablement moins rigide radialement. La perte de rigidité de cette articulation augmente dans les mêmes proportions la déflexion lors de l'action d'une force transversale et est donc nuisible au but recherché à savoir limiter la tendance à l'ouverture de cette suspension connue.

La présente invention a pour but de réaliser une articulation élastique pour bras oscillant tiré ne présentant pas les inconvénients ci-dessus.

Pour cela, le dispositif d'articulation d'un support de roue arrière, tel qu'un bras oscillant tiré, sur une structure d'un véhicule automobile, lequel support pivote autour d'un axe sensiblement transversal au plan longitudinal médian du véhicule par deux articulations élastiques espacées axialement l'une de l'autre, l'une des articulations étant coaxiale à l'axe de pivotement du support, est caractérisé en ce que la seconde articulation comprend une pièce rigide, montée pivotante sur un axe fixe coaxial à l'axe de pivotement dudit support et disposé dans un alésage traversant de la pièce rigide qui est emmanchée dans un évidement du support avec interposition d'un corps élastique entre la pièce rigide et le support, lequel corps élastique présente une grande flexibilité dans une direction sensiblement horizontale d'un axe de la pièce rigide, inclinée par rapport à l'axe de pivotement du support et une faible flexibilité perpendiculairement à cette direction.

Selon une caractéristique de l'invention, la seconde articulation est plus éloignée de la roue arrière que la première articulation et l'axe de la pièce rigide est incliné vers l'avant du véhicule par rapport à l'axe de pivotement précité du côté de la première articulation.

Selon une autre caractéristique de l'invention, le corps élastique est en forme de manchon, par exemple en élastomère, emmanché sur une portée extérieure cylindrique de la pièce rigide dont l'axe intersecte l'axe de pivotement en un point formant le centre de la portée cylindrique et de l'axe fixe.

Selon encore une autre caractéristique de l'invention, le manchon élastique précité est constitué d'au moins deux portions superposées radialement et séparées par une armature cylindrique.

Selon toujours une autre caractéristique de l'invention, la pièce rigide est montée pivotante sur l'axe précité par l'intermédiaire d'un manchon élastique présentant une faible flexibilité radiale et comportant une extension radiale interposée axialement entre la pièce rigide et une partie fixe de la structure du véhicule.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :

– La figure 1 est une vue de dessus d'un bras oscillant tiré de suspension d'une roue arrière d'un véhicule automobile ;

– la figure 2 et une vue en coupe de l'une des articulations élastiques du bras tiré conforme à l'invention ; et

– La figure 3 représente un deuxième mode de réalisation de l'articulation élastique.

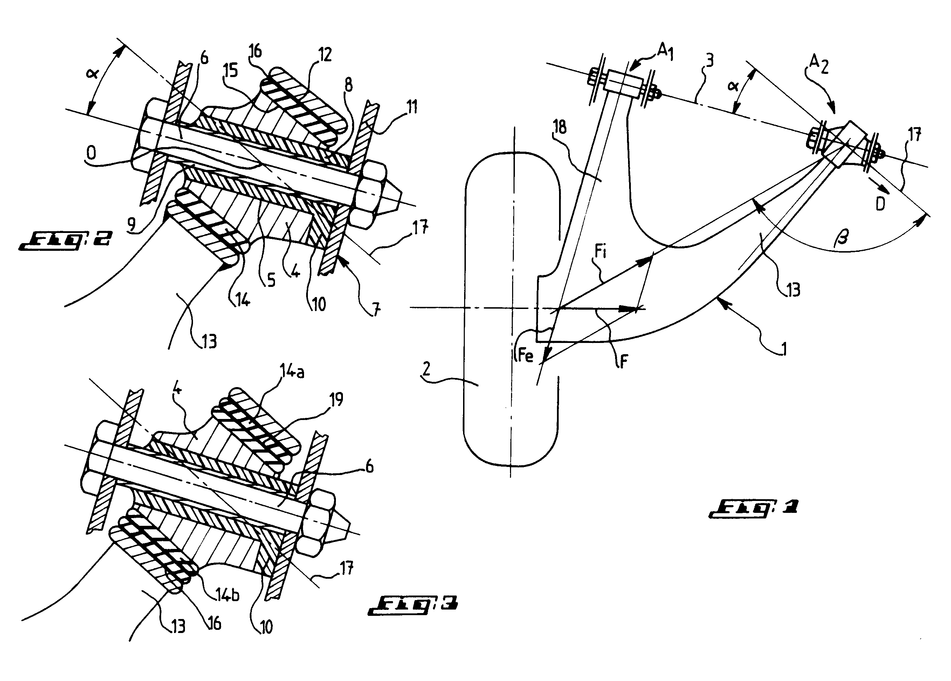

En se reportant aux figures 1 et 2, la référence 1 désigne un support de roue arrière 2 constitué dans le cas présent par un bras oscillant du type tiré monté pivotant autour d'un axe 3 transversal ou légèrement oblique par rapport au plan longitudinal médian du véhicule (non représenté) par deux articulations élastiques A1, A2 espacées axialement l'une de l'autre et fixées chacune à une structure du véhicule automobile telle que le châssis de celui-ci.

Selon l'invention, l'articulation A1 étant coaxiale à l'axe 3, l'articulation A2 comprend une pièce rigide 4 comportant un alésage débouchant ou traversant 5 à travers lequel est disposé coaxialement un axe 6, constitué par exemple par un boulon solidaire d'une chape de fixation 7 elle-même solidaire du châssis du véhicule. L'axe du boulon 6 est coaxial à l'axe de pivotement 3 du bras 1.

La pièce rigide 4 est montée pivotante sur l'axe du boulon 6 par l'intermédiaire d'un manchon élastique 8, par exemple en élastomère, et d'un manchon métallique intérieur 9 solidaire du manchon 8 à l'intérieur de celui-ci et maintenu entre les flasques de la chape de fixation 7, les manchons 8 et 9 étant montés concentriquement à l'axe du boulon 6 dans l'alésage 5. Le manchon 8, d'une épaisseur radiale relativement faible et d'une longueur relativement grande, présente une raideur radiale élevée et comporte, de préférence, une extension radiale 10 interposée axialement entre la pièce rigide 4 et l'un des flasques 11 de la chape 7.

La pièce rigide 4 est emmanchée dans un évidement ou ouverture circulaire 12 de la branche 13 du bras 1 par l'intermédiaire d'un manchon élastique 14, par exemple en élastomère, fixé par emmanchement à force sur une portée cylindrique 15 de la pièce 4 et d'un manchon métallique extérieur 16 superposé redialement au manchon 14 et solidaire de celui-ci, le manchon 16 étant fixé dans l'évidement 12 par emmanchement à force. Les manchons 14 et 16 sont concentriques à l'axe 17 de la pièce rigide 4 ou axe de la portée cylindrique 15. L'axe 17 de la portée cylindrique 15 est incliné ou décalé par rapport à l'axe de pivotement 3 d'un angle $\alpha$ et intersecte l'axe de pivotement en un point 0 constituant le centre géométrique commun à la portée cylindrique 15 et à l'axe du boulon 6. L'articulation A2 est plus éloignée du plan médian longitudinal de la roue 2 que l'articulation A1 et l'axe 17 de la portée cylindrique 15 est incliné suivant l'angle $\alpha$ vers l'avant du véhicule par rapport à l'axe de pivotement 3 du côté de l'articulation A1.

Le manchon élastique 14, de grand diamètre par rapport au manchon élastique 8, a une raideur axiale faible ou une flexibilité axiale élevée dans la direction sensiblement horizontale de l'axe 17 de la portée cylindrique 15 et présente de plus une raideur radiale élevée ou une flexibilité radiale faible perpendiculairement à cette direction.

Le manchon élastique 8 permet l'oscillation du bras 1 sans angle conique contrairement au dispositif d'articulation du brevet britannique décrit précédemment et le manchon 14, du fait de son inclinaison $\alpha$ par rapport à l'axe 3, oblige la pièce rigide 4 et le manchon métallique 16 à tourner en bloc avec le bras 1 lors des mouvements d'oscillation de celui-ci.

Lorsqu'une force F transversale au plan médian longitudinal de la roue 2 est appliquée au bras 1, celle-ci se décompose vectoriellement dans la direction des deux articulations A1 et A2 suivant respectivement une composante de force $F_i$ déplaçant dans la direction D de l'axe 17 l'extrémité intérieure de la branche 13 du bras 1 si l'angle $\beta$ défini entre l'axe 17 et la direction de la force $F_i$ est supérieur à 90° et une composante de force $F_e$ qui tire sur l'extrémité extérieure de la branche 18 du bras 1 et agit normalement à l'axe 3 de l'articulation A1. L'ensemble constitué par le bras 1 et la roue 2 va donc tourner dans le sens du pincement, comme cela est souhaité.

On comprend que la force F appliquée au bras 1 va provoquer le déplacement de la pièce rigide 4 par rapport au bras 1 suivant l'axe 17. Ce déplacement peut être amplifié par l'extension 10 qui permet de bloquer toute translation parasite le long de l'axe de pivotement 3 et en diminuant la raideur axiale du manchon 14 sans affaiblir sa raideur radiale. Ceci peut être obtenu par exemple en augmentant l'épaisseur radiale, c'est-à-dire, comme représenté en figure 3, en réalisant le manchon 14 en au moins deux portions 14a, 14b superposées radialement et séparées l'une de l'autre par une armature cylindrique 19.

L'articulation extérieure A1, de structure classique, est amenée également à se déplacer axialement et possédera de préférence une caractéristique de raideur radiale élevée, combinée avec une caractéristique de raideur axiale faible, de façon à favoriser le mouvement ci-dessus permettant la création d'un angle de pincement de la roue 2 lors de l'existence d'une force transversale prédéterminée appliquée au bras 1 lorsque le véhicule se déplace par exemple en virage.

## Revendications

1. Dispositif d'articulation d'un support de roue arrière, tel qu'un bras oscillant tiré, sur une structure d'un véhicule automobile, lequel support pivote autour d'un axe sensiblement transversal au plan médium longitudinal du véhicule par deux articulations élastiques espacées axialement l'une de l'autre, l'une (A1) des articulations étant coaxiale à l'axe de pivotement (3) du support, caractérisé en ce que la seconde articulation (A2) comprend une pièce rigide (4) montée pivotante sur un axe fixe (6) coaxial à l'axe de pivotement (3) et disposé dans un alésage traversant (5) de la pièce rigide (4) qui est emmanchée dans un évidement (12) du support (1) avec interposition d'un corps élastique (14) entre la pièce rigide (4) et le support (1), lequel corps élastique (14) présente une grande flexibilité dans la direction sensiblement horizontale d'un axe (17) de la pièce rigide (4), qui est incliné par rapport à l'axe de pivotement (3), et une faible flexibilité perpendiculairement à cette direction.

2. Dispositif selon la revendication 1, caractérisé en ce que la seconde articulation (A2) est plus éloignée de la roue arrière (2) que la première articulation (A1) et en ce que l'axe (17) de la pièce rigide (4) est incliné vers l'avant du véhicule par rapport à l'axe de pivotement (3) du côté de la première articulation (A1).

3. Dispositif selon la revendication 1 ou 2, caractérisé en ce que le corps élastique (14) est en forme de manchon, par exemple en élastomère, emmanché sur une portée extérieure cylindrique (15) de la pièce rigide ( 4) dont l'axe (17) intersecte l'axe de pivotement (3) en un point (0) formant le centre de la portée cylindrique (15) et de l'axe fixe (6).

4. Dispositif selon la revendication 3, caractérisé en ce que le manchon élastique (14) est constitué d'au moins deux portions (14a, 14b) superposées radialement et séparées l'une de l'autre par une armature cylindrique (19).

5. Dispositif selon la revendication 1, caractérisé en ce que la pièce rigide (4) est montée pivotante sur l'axe (6) par un manchon élastique (8) présentant une faible flexibilité radiale et comportant une extension radiale (10) interposée axialement entre la pièce rigide (4) et une partie fixe (11) de la structure du véhicule.

6. Dispositif selon l'une des revendications précédentes, caractérisé en ce que la première articulation (A1) présente une flexibilité élevée en direction axiale, et faible en direction radiale.


**Patentansprüche**

1. Vorrichtung zur Anlenkung eines Hinterradträgers wie eines gezogenen Schwingungsarmes an einem Aufbau eines Kraftfahrzeugs, welcher Träger um eine im wesentlichen quer zur Längsmittelebene des Fahrzeugs über zwei voneinander axial entfernte elastische Gelenke schwenkt, wobei das eine Gelenk (A1) koaxial zur Schwenkachse (3) des Trägers ist, dadurch gekennzeichnet, dass das zweite Gelenk (A2) einen an einer koaxial zur Schwenkachse (3) verlaufenden feststehenden Achse schwenkbar angeordneten steifen Teil (4) aufweist, wobei die ortsfeste Achse (6) in einer den steifen Teil (4) durchsetzenden Bohrung (5) angeordnet ist, welcher Teil in einer Aussparung (12) des Trägers (1) unter Zwischenschaltung eines elastischen Körpers (14) zwischen dem steifen Teil (4) und dem Träger (1) eingesteckt ist, wobei der elastische Körper (14) eine grosse Biegsamkeit in der im wesentlichen waagerechten Richtung einer Achse (17) des steifen Teils (4), welche im Bezug auf die Schwenkachse (3) geneigt ist und eine schwache Biegsamkeit senkrecht zu dieser Richtung aufweist.

2. Vorrichtung nach Anspruch 1, dadurch gekennzeichnet, dass das zweite Gelenk (A2) von dem Hinterrad (2) weiter entfernt ist als das erste Gelenk (A1) und dass die Achse (17) des steifen Teils (4) nach vorne des Fahrzeugs gegenüber der Schwenkachse (3) auf der Seite des ersten Gelenks (A1) geneigt ist.

3. Vorrichtung nach Anspruch 1 oder 2, dadurch gekennzeichnet, dass der elastische Körper (14) die Gestalt einer auf einem zylindrischen äusseren Bereich (15) des steifen Teils (4) aufgesteckten Muffe z.B. aus Elastomer hat, wobei die Achse (17) des steifen Teils die Schwenkachse (3) in einem den Mittelpunkt des zylindrischen Bereichs (15) und der ortsfesten Achse (6) bildenden Punkt (0) schneidet.

4. Vorrichtung nach Anspruch 3, dadurch gekennzeichnet, dass diE elastische Muffe (14) aus wenigstens zwei radial übereinander liegenden und voneinander durch eine zylindrische Bewehrung (19) getrennten Teilen (14a,14b) besteht.

5. Vorrichtung nach Anspruch 1, dadurch gekennzeichnet, dass der steife Teil (4) auf der Achse (6) über eine eine schwache radiale Biegsamkeit aufweisende elastische Hülse (8) schwenkbar angeordnet ist, welche einen zwischen dem steifen Teil (4) und einem ortsfesten Teil (11) des Aufbaues des Fahrzeugs zwischengefügten radialen Ansatz aufweist.

6. Vorrichtung nach einem der vorangehenden Ansprüche, dadurch gekennzeichnet, dass das erste Gelenk (A1) eine hohe Biegsamkeit in axialer Richtung und eine schwache Biegsamkeit in radialer Richtung aufweist.


**Claims**

1. Device for the pivotal connection of a rear wheel support such as a trailing oscillating arm onto a structure of an automotive vehicle, which support is pivoting about an axis substantially transversal to the longitudinal middle plane of the vehicle through two elastic pivotal connections axially spaced from each other, one (A1) of the pivotal connections being coaxial with the pivot axis (3) of the support, characterized in that the second pivotal connection (A2) comprises a rigid part (4) pivotally mounted onto a stationary axis (6) coaxial with the pivot axis (3) and disposed in a bore (5) extending through the rigid part (4) which is fitted into a recess (12) of the support (1) with the interposition of an elastic body (14) between the rigid part (4) and the support (1), which elastic body (14) exhibits a great flexibility in the substantially horizontal direction of an axis (17) of the rigid part (4) which is inclined with respect to the pivot axis (3) and a small flexibility perpendicularly to this direction.

2. Device according to claim 1, characterized in that the second pivotal connection (A2) is more remote from the rear wheel (2) then the first pivotal connection (A1) and in that the axis (17) of the rigid part (4) is inclined towards the front of the vehicle with respect to the pivot axis (3) on the side of the first pivotal connection (A1).

3. Device according to claim 1 or 2, characterized in that the elastic body (14) is in the shape of a sleeve made from example from an elastomer and fitted onto an outer cylindrical bearing portion (15) of the rigid part (4) the axis (17) of which is intersecting the pivot axis (3) at a point (0) forming the center of the cylindrical bearing portion (15) and of the stationary axis (6).

4. Device according to claim 3, characterized in that the elastic sleeve (14) consists of at least two portions (14a,14b) radially superimposed and separated from each other by a cylindrical frame (19).

5. Device according to claim 1, characterized in that the rigid part (4) is pivotally mounted onto the axis (6) through an elastic bush (8) exhibiting a small radial flexibility and comprising a radial extension (10) axially interposed between the rigid part (4) and a stationary portion (11) of the structure of the vehicule.

6. Device according to one of the preceding claims, characterized in that the first pivotal connection (A1) exhibits a flexibility high in the axial direction and low in the radial direction.

Fig. 1

Fig. 2

Fig. 3